(19) **Europäisches Patentamt**
**European Patent Office**
**Office européen des brevets**

(11) **EP 3 717 750 B1**

(12) **FASCICULE DE BREVET EUROPEEN**

(45) Date de publication et mention de la délivrance du brevet:
**23.03.2022 Bulletin 2022/12**

(21) Numéro de dépôt: **18826420.4**

(22) Date de dépôt: **28.11.2018**

(51) Classification Internationale des Brevets (IPC):
*F01D 11/24* (2006.01)     *G01F 1/34* (2006.01)
*G01F 1/68* (2006.01)      *F01D 17/06* (2006.01)
*F01D 17/08* (2006.01)     *G01F 15/00* (2006.01)

(52) Classification Coopérative des Brevets (CPC):
**F01D 11/24; G01F 1/34; G01F 1/68; G01F 15/005;**
F01D 17/06; F01D 17/08; F05D 2270/301;
F05D 2270/304; F05D 2270/3062; F05D 2270/71;
G01F 15/002

(86) Numéro de dépôt international:
**PCT/FR2018/053017**

(87) Numéro de publication internationale:
**WO 2019/106286 (06.06.2019 Gazette 2019/23)**

(54) **PROCÉDÉ ET DISPOSITIF DE MESURE DU DÉBIT D'AIR DE REFROIDISSEMENT D'UN CARTER DE TURBOMACHINE**

VERFAHREN UND VORRICHTUNG ZUR MESSUNG DER DURCHFLUSSRATE VON KÜHLLUFT IN EINEM TURBOMASCHINENGEHÄUSE

METHOD AND DEVICE FOR MEASURING THE FLOW RATE OF COOLING AIR IN A TURBOMACHINE CASING

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.11.2017 FR 1761474**

(43) Date de publication de la demande:
**07.10.2020 Bulletin 2020/41**

(73) Titulaire: **Safran Aircraft Engines**
**75015 Paris (FR)**

(72) Inventeur: **BOUDSOCQ, Benjamin**
**77550 Moissy-Cramayel (FR)**

(74) Mandataire: **Regimbeau**
**Parc d'affaires Cap Nord A**
**2, allée Marie Berhaut**
**CS 71104**
**35011 Rennes Cedex (FR)**

(56) Documents cités:
| | |
|---|---|
| **FR-A1- 2 998 050** | **FR-A1- 2 998 050** |
| **FR-A1- 2 999 226** | **FR-A1- 2 999 226** |
| **US-A- 3 167 954** | **US-A- 3 167 954** |
| **US-A- 4 003 249** | **US-A1- 2014 271 119** |
| **US-A1- 2014 271 119** | **US-A1- 2017 298 755** |
| **US-A1- 2017 298 755** | |

## Description

L'invention concerne un procédé de mesure du débit d'air de refroidissement dans un circuit de refroidissement d'un carter d'une turbine haute pression d'une turbomachine.

Un domaine d'application de l'invention est notamment les turboréacteurs d'avion ou turbopropulseurs d'avion.

Ce circuit de refroidissement (en anglais : High Pressure Turbine Active Clearance Control) joue sur le refroidissement du carter en sommet d'aubes de la turbine haute pression. Le débit précité est appelé débit HPTACC. La maitrise du jeu entre ces aubes et le carter a un impact très fort sur les marges de températures dans les turbines. L'objectif est donc d'avoir le jeu le plus faible pour avoir la meilleure performance tout en évitant le contact entre le carter et les aubes, qui dans ce cas, viendrait user et dégrader la turbine haute pression d'une manière non réversible.

La connaissance et la précision du débit HPTACC a un impact de premier ordre sur le contrôle du jeu en sommet d'aubes de la turbine haute pression. Il est donc très important de maitriser et connaitre le débit d'air qui passe dans le circuit de refroidissement.

Habituellement, pour connaitre le débit, une température de masse du carter en sommet d'aube ou des températures d'air dédiées et divers modèles théoriques implémentés dans le calculateur (modèle de pression en entrée du circuit de refroidissement, modèle de température en entrée du circuit de refroidissement, modèle de perméabilité du circuit de refroidissement, modèle de pression en sortie du circuit de refroidissement) sont utilisés. Chacun de ces modèles a l'inconvénient d'apporter ses propres imprécisions. Ces imprécisions s'accumulent et engendrent une grande incertitude sur le débit d'air de refroidissement, ce qui empêche l'optimisation du circuit de refroidissement.

Le document FR-A-2 999 226 concerne un procédé de mesure du débit d'air de refroidissement dans un circuit d'air de refroidissement d'une turbomachine, ayant un capteur de vitesse de rotation d'un arbre basse pression et dans lequel on calcule un débit d'air d'alimentation de moyens de refroidissement en fonction de l'information de vitesse de rotation de l'arbre de la turbine basse pression.

L'invention vise à obtenir un procédé et un dispositif de mesure du débit d'air de refroidissement et une turbomachine munie de ceux-ci, qui pallient les inconvénients de l'état de la technique et permettent d'obtenir une meilleure précision sur ce débit, avec un coût moindre et une meilleure fiabilité.

A cet effet, un premier objet de l'invention est un procédé de mesure du débit d'air de refroidissement dans un circuit d'air de refroidissement d'un carter d'une turbine haute pression d'une turbomachine suivant la revendication 1. Grâce à l'invention, on utilise les capteurs précités, qui sont habituellement présents pour le contrôle moteur, pour déterminer le débit d'air de refroidissement. Ainsi, l'invention permet de déterminer le débit d'air de refroidissement sans ajout de capteur spécifique.

Les revendications 2 à 12 concernent des modes de réalisation du procédé de mesure précité.

Un deuxième objet de l'invention est un dispositif de mesure, destiné à mesurer un débit d'air de refroidissement dans un circuit d'air de refroidissement d'un carter d'une turbine haute pression d'une turbomachine, suivant la revendication 13.

Les revendications 14 et 15 concernent des modes de réalisation du dispositif de mesure précité.

Un troisième objet de l'invention est un programme d'ordinateur, comportant des instructions de code pour la mise en œuvre du procédé de mesure du débit d'air de refroidissement dans un circuit d'air de refroidissement d'un carter d'une turbine haute pression d'une turbomachine, tel que décrit ci-dessus, lorsqu'il est exécuté sur un calculateur appartenant à l'unité de calcul du dispositif de mesure selon l'une quelconque des revendications 13 à 15.

L'invention sera mieux comprise à la lecture de la description qui va suivre, donnée uniquement à titre d'exemple non limitatif en référence aux dessins annexés, sur lesquels :

- la figure 1 représente schématiquement une turbomachine sur laquelle est mis en œuvre le calcul du débit d'air de refroidissement suivant l'invention,
- la figure 2 est un synoptique modulaire d'un dispositif de mesure du débit d'air de refroidissement suivant un mode de réalisation de l'invention.

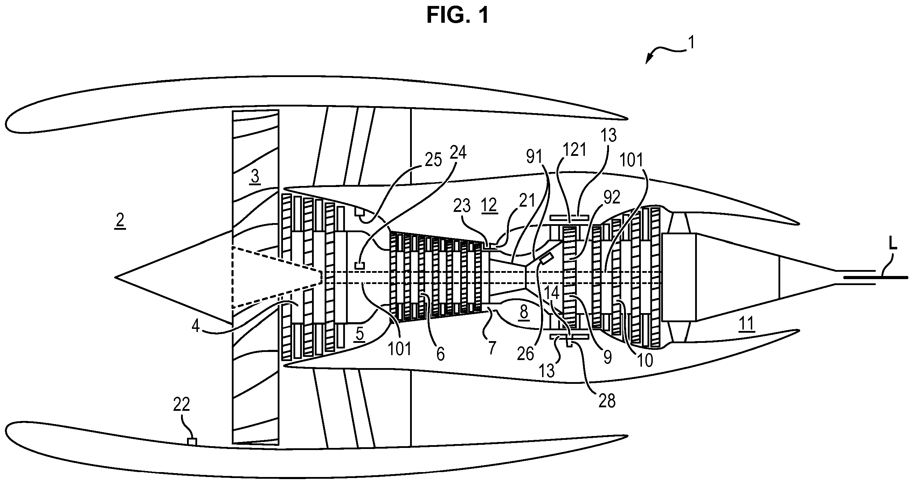

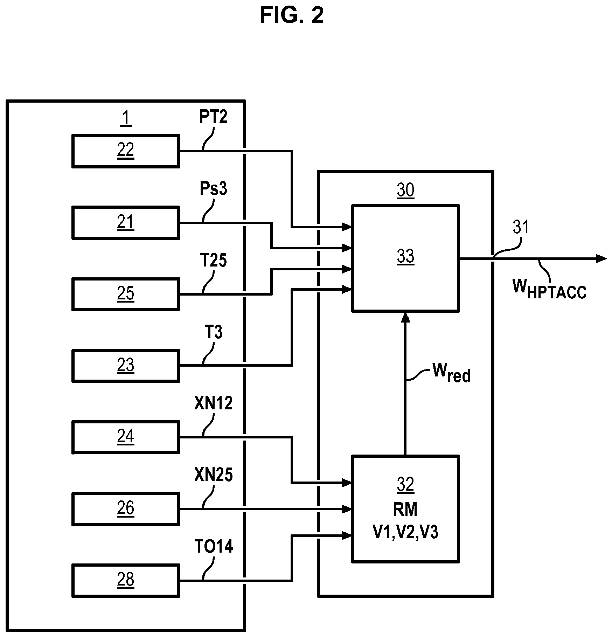

Le procédé de mesure et le dispositif de mesure mettant en œuvre ce procédé de mesure suivant des modes de réalisation de l'invention sont décrits ci-dessous en référence aux figures 1 et 2.

A la figure 1, une turbomachine 1, telle que par exemple un turboréacteur d'avion ou un turbopropulseur, comporte successivement, de l'amont vers l'aval dans le sens de passage du fluide :

- une entrée 2 d'admission d'air de soufflante,
- une soufflante 3 (en anglais : fan) d'aspiration d'air de l'amont vers l'aval,
- un compresseur basse pression 4,
- un compartiment 5 entre le compresseur basse pression 4 et un compresseur haute pression 6,
- le compresseur haute pression 6,

- une sortie 7 du compresseur haute pression 6,
- une chambre 8 de combustion,
- une turbine haute pression 9,
- une turbine basse pression 10,
- une tuyère 11 d'éjection de fluide.

La turbine haute pression 9 est reliée mécaniquement à un arbre haute pression 91 pour faire tourner le compresseur haute pression 6 autour de son premier axe de rotation. La turbine basse pression 10 est reliée mécaniquement à un arbre basse pression 101 pour faire tourner le compresseur basse pression 4 autour de son deuxième axe de rotation. Le premier axe de rotation et le deuxième axe de rotation sont centraux et coaxiaux suivant la direction longitudinale de la turbomachine, orientée de l'amont vers l'aval.

La turbine haute pression 9 comporte des premières aubes 92 solidaires de l'arbre haute pression 91 et aptes à tourner autour du premier axe de rotation.

La turbomachine 1 comporte un carter 12 comportant un partie 121 de carter située autour des aubes 92 de la turbine haute pression 9, cette partie 121 de carter étant appelée carter 121 de turbine haute pression.

La turbomachine 1 comporte un circuit 13 d'air de refroidissement pour refroidir le carter 121 de turbine haute pression. Il existe un jeu entre les aubes 92 de la turbine haute pression 9 et le carter 121 de turbine haute pression. Le circuit 13 d'air de refroidissement fait partie d'un système de contrôle actif du jeu de la turbine haute pression 9, connu sous l'acronyme HPTACC (en anglais : High Pressure Turbine Active Clearance Control). Le circuit 13 d'air de refroidissement est également désigné par le terme de circuit HPTACC. Le circuit 13 d'air de refroidissement prélève de l'air de refroidissement depuis le compresseur haute pression 6. Le circuit 13 d'air de refroidissement comporte un ou plusieurs conduits ou tubes pour envoyer l'air de refroidissement contre la surface externe du carter 121 de turbine haute pression, la surface interne du carter 121 de turbine haute pression étant tournée vers les aubes 92. Le circuit 13 d'air de refroidissement comporte une ou plusieurs vannes 14 pour modifier le débit d'air de refroidissement dans le ou les conduits du circuit 13.

La turbomachine 1 comporte en outre :

- un premier capteur 22 de pression, disposé en entrée 2 de la soufflante 3, pour mesurer une pression totale PT2 d'entrée de soufflante,
- un deuxième capteur 21 de pression, disposé en sortie 7 du compresseur haute pression 6, pour mesurer une pression statique Ps3 de sortie du compresseur haute pression 6,
- un troisième capteur 25 de température, disposé dans le compartiment 5 entre le compresseur basse pression 4 et le compresseur haute pression 6, pour mesurer une température T25 entre compresseurs,
- un quatrième capteur 23 de température, disposé en sortie 7 du compresseur haute pression 6, pour mesurer une température T3 de sortie du compresseur haute pression 6,
- un cinquième capteur 24 de vitesse XN12 de rotation de l'arbre basse pression 101,
- un sixième capteur 26 de vitesse XN25 de rotation de l'arbre haute pression 91,
- un septième capteur 28 de taux TO14 d'ouverture de la vanne 14 du circuit 13 d'air de refroidissement.

Bien entendu, seul l'un ou plusieurs des capteurs 21, 22, 23, 24, 25, 26, 28 peut être prévu(s).

Suivant l'invention, le débit $W_{HPTACC}$ d'air de refroidissement du circuit 13 d'air de refroidissement du carter 121 de la turbine haute pression 9 est reconstitué à partir d'un, plusieurs ou l'ensemble de ces capteurs 21, 22, 23, 24, 25, 26 et 28, qui sont des capteurs de contrôle moteur, c'est-à-dire des capteurs utilisés par ailleurs pour commander le fonctionnement de la turbomachine. Les capteurs 21, 22, 23, 24, 25, 26 sont extérieurs au circuit 13 d'air de refroidissement du carter 121.

On calcule dans une unité 30 de calcul le débit $W_{HPTACC}$ d'air de refroidissement du circuit 13 d'air de refroidissement du carter 121 de la turbine haute pression 9 en fonction d'au moins l'un, plusieurs ou l'ensemble de la pression totale PT2 d'entrée de soufflante, la pression statique Ps3 de sortie du compresseur haute pression 6, la température T25 entre compresseurs, la température T3 de sortie du compresseur haute pression 6, la vitesse de rotation XN12 de l'arbre basse pression, la vitesse de rotation XN25 de l'arbre haute pression, le taux TO14 d'ouverture de vanne du circuit 13 d'air de refroidissement.

L'inventeur a en effet déterminé de manière empirique que les variations de ces paramètres influaient sur le débit $W_{HPTACC}$ d'air de refroidissement.

Ainsi, l'inventeur a déterminé que le débit $W_{HPTACC}$ d'air de refroidissement variait en fonction de la première différence entre la température T3 de sortie du compresseur haute pression 6 et la température T25 entre compresseurs, notamment en fonction de la racine carrée de cette première différence (T3-T25), et plus précisément proportionnellement à l'inverse de la racine carrée de cette première différence (T3-T25). Ainsi, suivant des modes de réalisation, on calcule par l'unité 30 de calcul le débit $W_{HPTACC}$ d'air de refroidissement en fonction de cette première différence (T3-T25), ou en fonction de la racine carrée de cette première différence (T3-T25), ou en fonction de l'inverse de la racine carrée de cette première différence (T3-T25).

L'inventeur a également déterminé que le débit $W_{HPTACC}$ d'air de refroidissement variait proportionnellement à la deuxième différence entre la pression statique Ps3 de sortie du compresseur haute pression 6 et la pression totale PT2 d'entrée de soufflante. Ainsi, suivant un mode de réalisation, on calcule par l'unité 30 de calcul le débit $W_{HPTACC}$ d'air de refroidissement proportionnellement à cette deuxième différence (Ps3-PT2).

L'inventeur a également déterminé que le débit $W_{HPTACC}$ d'air de refroidissement variait proportionnellement au rapport entre la pression totale PT2 d'entrée de soufflante sur la pression statique Ps3 de sortie du compresseur haute pression 6. Ainsi, suivant un mode de réalisation, on calcule par l'unité 30 de calcul le débit $W_{HPTACC}$ d'air de refroidissement proportionnellement à ce rapport PT2/Ps3.

L'inventeur a en outre déterminé que le débit $W_{HPTACC}$ d'air de refroidissement variait proportionnellement à un débit réduit $W_{red}$ et que ce débit réduit $W_{red}$ pouvait être modélisé par un unique modèle variant en fonction du deuxième rapport entre la vitesse de rotation XN25 de l'arbre haute pression sur la vitesse de rotation XN12 de l'arbre basse pression et en fonction du taux TO14 d'ouverture de vanne du circuit 13 d'air de refroidissement. Le débit $W_{HPTACC}$ d'air de refroidissement est par exemple exprimé en kg/s. Le débit réduit $W_{red}$ est par exemple exprimé en kg/s.

Ainsi, suivant un mode de réalisation, des valeurs V1 de débit réduit $W_{red}$ sont préenregistrées dans une base 32 de données en association avec des valeurs V2 du deuxième rapport XN25/XN12 et en association avec des valeurs V3 du taux TO14 d'ouverture de vanne du circuit 13 d'air de refroidissement. Ces valeurs V1, V2, V3 peuvent être préenregistrées dans la base 32 de données sous la forme par exemple d'un ensemble de points pour une multiplicité de valeurs V2 du deuxième rapport XN25/XN12, qui sont situées par exemple dans une plage déterminée et qui sont associées à une multiplicité de valeurs V1 de débit réduit $W_{red}$, et ce pour une pluralité de valeurs V3 de taux TO14 d'ouverture de vanne du circuit 13 d'air de refroidissement.

Suivant un mode de réalisation, on calcule le débit réduit $W_{red}$ à partir de valeurs V1, V2, V3 de la base 32 de données et en fonction du rapport calculé entre la vitesse de rotation XN25 de l'arbre haute pression, ayant été mesurée, sur la vitesse de rotation XN12 de l'arbre basse pression, ayant été mesurée (ce rapport étant alors appelé deuxième rapport mesuré RM pour XN25/XN12) et en fonction du taux TO14 d'ouverture de vanne du circuit 13 d'air de refroidissement, ayant été mesuré. Ce calcul peut être effectué en sélectionnant dans la base 32 de données les valeurs V2 les plus proches du deuxième rapport mesuré RM pour XN25/XN12 pour les valeurs V3 les plus proches du taux TO14 d'ouverture de vanne du circuit 13 d'air de refroidissement, ayant été mesuré, puis en effectuant une interpolation ou une extrapolation des valeurs V1 associées à ces valeurs V2 et V3 sélectionnées. En variante, les valeurs V1 peuvent être définies dans la base 32 de données par une fonction liant les valeurs V1 aux valeurs V2 pour une pluralité de valeurs V3. Pour chaque valeur V3 du taux TO14 d'ouverture de vanne du circuit 13 d'air de refroidissement, les valeurs V1 de débit réduit $W_{red}$ peuvent par exemple être décroissantes en fonction des valeurs croissantes V2 du deuxième rapport XN25/XN12. Pour chaque valeur V2 du deuxième rapport XN25/XN12, les valeurs V1 de débit réduit $W_{red}$ peuvent par exemple être croissantes en fonction des valeurs croissantes V3 du taux TO14 d'ouverture de vanne du circuit 13 d'air de refroidissement.

Suivant un mode de réalisation, on calcule dans l'unité 30 de calcul le débit $W_{HPTACC}$ d'air de refroidissement du circuit 13 d'air de refroidissement du carter 121 de la turbine haute pression 9 en fonction d'à la fois la pression totale PT2 d'entrée de soufflante, la pression statique Ps3 de sortie du compresseur haute pression 6, la température T25 entre compresseurs, la température T3 de sortie du compresseur haute pression 6, la vitesse de rotation XN12 de l'arbre basse pression, la vitesse de rotation XN25 de l'arbre haute pression et le taux TO14 d'ouverture de vanne du circuit 13 d'air de refroidissement.

Suivant un mode de réalisation, on calcule dans l'unité 30 de calcul le débit $W_{HPTACC}$ d'air de refroidissement selon l'équation suivante :

$$W_{HPTACC} = W_{red}\left(\frac{XN25}{XN12}\right) * \frac{PT2}{Ps3} * (Ps3 - PT2) * \frac{1}{\sqrt{T3 - T25}}$$

où $W_{red}\left(\dfrac{XN25}{XN12}\right)$ désigne le débit réduit $W_{red}$ en fonction du deuxième rapport XN25/XN12,

et * désigne la multiplication.

Cette équation est par exemple prévue pour chacune de la pluralité de valeurs V3 de taux TO14 d'ouverture de vanne du circuit 13 d'air de refroidissement. L'unité 30 de calcul comporte par exemple un module 33 pour calculer le débit $W_{HPTACC}$ d'air de refroidissement à partir d'une part du débit réduit $W_{red}$ ayant été calculé à partir de la base 32 de données et d'autre part de la pression totale PT2 d'entrée de soufflante, de la pression statique Ps3 de sortie du compresseur haute pression 6, de la température T25 entre compresseurs et de la température T3 de sortie du compresseur haute pression 6.

Suivant un mode de réalisation de l'invention, l'unité 30 de calcul est automatique et peut être ou comporter par exemple un ou plusieurs calculateur(s) et/ou un ou plusieurs ordinateur(s), et/ou un ou plusieurs processeur(s) et/ou un ou plusieurs serveur(s) et/ou une ou plusieurs machine(s), pouvant être programmées à l'avance par un programme informatique préenregistré. L'unité 30 de calcul est embarquée avec la turbomachine sur l'avion ou autres.

Suivant un mode de réalisation de l'invention, sur l'unité 30 de calcul ou calculateur 30 est enregistré un programme d'ordinateur, comportant des instructions de code pour la mise en œuvre du procédé de mesure du débit $W_{HPTACC}$ d'air de refroidissement. L'unité 30 de calcul ou calculateur 30 est apte à exécuter le programme d'ordinateur.

Suivant un mode de réalisation de l'invention, l'unité 30 de calcul comporte une sortie 31 sur laquelle est fournie le débit $W_{HPTACC}$ d'air de refroidissement du circuit 13 d'air de refroidissement du carter 121 de la turbine haute pression 9, ayant été calculé par cette unité 30 de calcul. Le débit $W_{HPTACC}$ d'air de refroidissement, ayant été calculé par l'unité 30 de calcul peut être par exemple enregistré dans la base 32 de données ou dans une autre mémoire, par exemple en association avec les mesures fournies par un plusieurs ou tous les capteurs 21, 22, 23, 24, 25, 26, 28, et/ou est par exemple affiché et/ou communiqué sur une interface homme-machine reliée à l'unité 30 de calcul et/ou transmis vers l'extérieur sur au moins un port de sortie.

L'invention permet de se dispenser d'un capteur de débit supplémentaire dédié dans le circuit 13 d'air de refroidissement du carter 121 de la turbine haute pression 9 de la turbomachine 1, et donc de gagner en coût et en fiabilité (un moins grand nombre de capteurs impliquant un moins grand risque de pannes), tout en améliorant la précision de la mesure de débit fournie par rapport aux solutions connues utilisant un tel capteur de débit dédié dans le circuit 13. De plus, l'invention permet de davantage limiter l'incertitude sur la mesure de débit fournie, de gagner de l'espace mémoire dans l'unité 30 de calcul et la base 32 de données. La valeur ainsi obtenue du débit $W_{HPTACC}$ d'air de refroidissement du circuit 13 suivant l'invention permet de mieux contrôler le refroidissement effectué par ce circuit 13 d'air de refroidissement sur le carter 121 de la turbine haute pression 9 et de mieux contrôler le jeu entre les aubes 92 de la turbine haute pression 9 et le carter 121 de turbine haute pression.

Bien entendu, les modes de réalisation, caractéristiques et exemples ci-dessus peuvent être combinés l'un avec l'autre ou être sélectionnés indépendamment l'un de l'autre.

## Revendications

**1.** Procédé de mesure du débit ($W_{HPTACC}$) d'air de refroidissement dans un circuit (13) d'air de refroidissement d'un carter (121) d'une turbine haute pression (9) d'une turbomachine (1),
**caractérisé en ce que**

l'on mesure au moins

- par un premier capteur (22) de pression, disposé en entrée (2) d'une soufflante (3) de la turbomachine (1) une pression totale (PT2) d'entrée de soufflante,
- par un deuxième capteur (21) de pression, disposé en sortie (7) d'un compresseur haute pression (6) de la turbomachine une pression statique (Ps3) de sortie du compresseur haute pression (6),
- par un cinquième capteur (24) de vitesse de rotation d'un arbre basse pression (101), une vitesse de rotation (XN12) de l'arbre basse pression (101),
- par un sixième capteur (26) de vitesse de rotation d'un arbre haute pression (91), une vitesse de rotation (XN25) de l'arbre haute pression (91),
- par un septième capteur (28) de taux d'ouverture d'au moins une vanne (14) du circuit d'air de refroidissement (HPTACC) un taux (TO14) d'ouverture de vanne du circuit (13) d'air de refroidissement,

on calcule dans une unité (30) de calcul le débit ($W_{HPTACC}$) d'air de refroidissement en fonction au moins de la pression totale (PT2) d'entrée de soufflante, de la pression statique (Ps3) de sortie du compresseur haute pression (6), de la vitesse de rotation (XN12) de l'arbre basse pression (101), de la vitesse de rotation (XN25) de l'arbre haute pression (91) et du taux (TO14) d'ouverture de vanne du circuit (13) d'air de refroidissement.

**2.** Procédé suivant la revendication 1, **caractérisé en ce que** l'on mesure par un troisième capteur (25) de température, disposé entre un compresseur basse pression (4) de la turbomachine et le compresseur haute pression (6), une température (T25) entre compresseurs,

on calcule dans l'unité (30) de calcul le débit ($W_{HPTACC}$) d'air de refroidissement en fonction au moins de la pression totale (PT2) d'entrée de soufflante, de la pression statique (Ps3) de sortie du compresseur haute pression (6), de la température (T25) entre compresseurs, de la vitesse de rotation (XN12) de l'arbre basse pression (101), de la vitesse de rotation (XN25) de l'arbre haute pression (91) et du taux (TO14) d'ouverture de vanne du circuit (13) d'air de refroidissement.

3. Procédé suivant la revendication 1 ou 2, **caractérisé en ce que** l'on mesure par un quatrième capteur (23) de température, disposé en sortie (7) du compresseur haute pression (6), une température (T3) de sortie du compresseur haute pression (6),
on calcule dans l'unité (30) de calcul le débit ($W_{HPTACC}$) d'air de refroidissement en fonction au moins de la pression totale (PT2) d'entrée de soufflante, de la pression statique (Ps3) de sortie du compresseur haute pression (6), de la température (T3) de sortie du compresseur haute pression (6), de la vitesse de rotation (XN12) de l'arbre basse pression (101), de la vitesse de rotation (XN25) de l'arbre haute pression (91) et du taux (TO14) d'ouverture de vanne du circuit (13) d'air de refroidissement.

4. Procédé suivant l'une quelconque des revendications précédentes, **caractérisé en ce que** les premier, deuxième, troisième, quatrième, cinquième et sixième capteurs (22, 21, 25, 23, 24, 26) sont des capteurs de contrôle moteur.

5. Procédé suivant l'une quelconque des revendications précédentes, **caractérisé en ce que** les premier, deuxième, troisième, quatrième, cinquième et sixième capteurs (22, 21, 25, 23, 24, 26) sont extérieurs au circuit (13) d'air de refroidissement du carter (121) de la turbine haute pression (9) de la turbomachine (1).

6. Procédé suivant l'une quelconque des revendications précédentes, **caractérisé en ce que** des valeurs (V1) de débit réduit ($W_{red}$) sont préenregistrées dans une base (32) de données en association avec des valeurs (V2) d'un rapport entre la vitesse de rotation (XN25) de l'arbre haute pression (91) sur la vitesse de rotation (XN12) de l'arbre basse pression (101) et en association avec des valeurs (V3) du taux (TO14) d'ouverture de vanne du circuit (13) d'air de refroidissement,

on calcule un débit réduit ($W_{red}$), à partir de valeurs (V1, V2, V3) de la base (32) de données et en fonction du rapport (RM) calculé entre la vitesse de rotation (XN25) de l'arbre haute pression (91), ayant été mesurée, sur la vitesse de rotation (XN12) de l'arbre basse pression (101), ayant été mesurée, et en fonction du taux (TO14) d'ouverture de vanne du circuit (13) d'air de refroidissement, ayant été mesuré,
le débit ($W_{HPTACC}$) d'air de refroidissement étant calculé proportionnellement au débit réduit ($W_{red}$), ayant été calculé.

7. Procédé suivant l'une quelconque des revendications précédentes, **caractérisé en ce que**

l'on mesure par un troisième capteur (25) de température, disposé entre un compresseur basse pression (4) de la turbomachine et le compresseur haute pression (6), une température (T25) entre compresseurs,
l'on mesure par un quatrième capteur (23) de température, disposé en sortie (7) du compresseur haute pression (6), une température (T3) de sortie du compresseur haute pression (6),
le débit ($W_{HPTACC}$) d'air de refroidissement est calculé en fonction d'une différence entre la température (T3) de sortie du compresseur haute pression (6) et la température (T25) entre compresseurs.

8. Procédé suivant la revendication 7, **caractérisé en ce que** le débit ($W_{HPTACC}$) d'air de refroidissement est calculé en fonction d'une racine carrée de la différence entre la température (T3) de sortie du compresseur haute pression (6) et la température (T25) entre compresseurs.

9. Procédé suivant la revendication 7, **caractérisé en ce que** le débit ($W_{HPTACC}$) d'air de refroidissement est calculé proportionnellement à l'inverse d'une racine carrée de la différence entre la température (T3) de sortie du compresseur haute pression (6) et la température (T25) entre compresseurs.

10. Procédé suivant l'une quelconque des revendications précédentes, **caractérisé en ce que** le débit ($W_{HPTACC}$) d'air de refroidissement est calculé proportionnellement à la différence entre la pression statique (Ps3) de sortie du compresseur haute pression (6) et la pression totale (PT2) d'entrée de soufflante.

11. Procédé suivant l'une quelconque des revendications précédentes, **caractérisé en ce que** le débit ($W_{HPTACC}$) d'air de refroidissement est calculé proportionnellement au rapport entre la pression totale (PT2) d'entrée de soufflante sur la pression statique (Ps3) de sortie du compresseur haute pression (6).

12. Dispositif de mesure, destiné à mesurer un débit ($W_{HPTACC}$) d'air de refroidissement dans un circuit (13) d'air de refroidissement d'un carter (121) d'une turbine haute pression (9) d'une turbomachine (1), **caractérisé en ce qu'**il comporte au moins

- un premier capteur (22) de pression, destiné à être disposé en entrée (2) d'une soufflante (3) de la turbomachine (1), pour mesurer une pression totale (PT2) d'entrée de soufflante,
- un deuxième capteur (21) de pression, destiné à être disposé en sortie (7) d'un compresseur haute pression (6) de la turbomachine, pour mesurer une pression statique (Ps3) de sortie du compresseur haute pression (6),
- un cinquième capteur (24) de vitesse (XN12) de rotation d'un arbre basse pression (101),
- un sixième capteur (26) de vitesse (XN25) de rotation d'un arbre haute pression (91),
- un septième capteur (28) de taux (TO14) d'ouverture d'au moins une vanne (14) du circuit (13) d'air de refroidissement,
- une unité (30) de calcul du débit ($W_{HPTACC}$) d'air de refroidissement dans le circuit (13) d'air de refroidissement du carter (121) de la turbine haute pression (9) en fonction au moins de la pression totale (PT2) d'entrée de soufflante, de la pression statique (Ps3) de sortie du compresseur haute pression (6), de la vitesse de rotation (XN12) de l'arbre basse pression (101), de la vitesse de rotation (XN25) de l'arbre haute pression (91) et du taux (TO14) d'ouverture de vanne du circuit (13) d'air de refroidissement.

13. Dispositif suivant la revendication 12 , **caractérisé en ce que** le dispositif comporte un troisième capteur (25) de température, destiné à être disposé entre un compresseur basse pression (4) de la turbomachine et le compresseur haute pression (6), pour mesurer une température (T25) entre compresseurs, l'unité (30) de calcul étant prévue pour calculer le débit ($W_{HPTACC}$) d'air de refroidissement dans le circuit (13) d'air de refroidissement du carter (121) de la turbine haute pression (9) en fonction au moins de la pression totale (PT2) d'entrée de soufflante, de la pression statique (Ps3) de sortie du compresseur haute pression (6), de la température (T25) entre compresseurs, de la vitesse de rotation (XN12) de l'arbre basse pression (101), de la vitesse de rotation (XN25) de l'arbre haute pression (91) et du taux (TO14) d'ouverture de vanne du circuit (13) d'air de refroidissement.

14. Dispositif suivant la revendication 12 ou 13 , **caractérisé en ce que** le dispositif comporte un quatrième capteur (23) de température, destiné à être disposé en sortie (7) du compresseur haute pression (6), pour mesurer une température (T3) de sortie du compresseur haute pression (6), l'unité (30) de calcul étant prévue pour calculer le débit ($W_{HPTACC}$) d'air de refroidissement dans le circuit (13) d'air de refroidissement du carter (121) de la turbine haute pression (9) en fonction au moins de la pression totale (PT2) d'entrée de soufflante, de la pression statique (Ps3) de sortie du compresseur haute pression (6), de la température (T3) de sortie du compresseur haute pression (6), de la vitesse de rotation (XN12) de l'arbre basse pression (101), de la vitesse de rotation (XN25) de l'arbre haute pression (91) et du taux (TO14) d'ouverture de vanne du circuit (13) d'air de refroidissement.

15. Programme d'ordinateur, comportant des instructions de code pour la mise en œuvre du procédé de mesure du débit ($W_{HPTACC}$) d'air de refroidissement dans un circuit (13) d'air de refroidissement d'un carter (121) d'une turbine haute pression (9) d'une turbomachine (1) suivant l'une quelconque des revendications 1 à 12, lorsqu'il est exécuté sur un calculateur appartenant à l'unité de calcul (30) du dispositif de mesure selon l'une quelconque des revendications 12 à 14.

**Patentansprüche**

1. Verfahren zur Messung der Durchflussrate ($W_{HPTACC}$) von Kühlluft in einem Kühlluftkreis (13) eines Gehäuses (121) einer Hochdruckturbine (9) einer Turbomaschine (1), **dadurch gekennzeichnet, dass**

mindestens gemessen wird

- von einem ersten Drucksensor (22), der am Einlass (2) eines Gebläses (3) der Turbomaschine (1) angeordnet ist, ein Gebläseeinlass-Gesamtdruck (PT2),
- von einem zweiten Drucksensor (21), der am Auslass (7) eines Hochdruckkompressors (6) der Turbomaschine angeordnet ist, ein statischer Auslassdruck (Ps3) des Hochdruckkompressors (6),

- von einem fünften Sensor (24) der Rotationsgeschwindigkeit einer Niederdruckwelle (101) eine Rotationsgeschwindigkeit (XN12) der Niederdruckwelle (101),
- von einem sechsten Sensor (26) der Rotationsgeschwindigkeit einer Hochdruckwelle (91) eine Rotationsgeschwindigkeit (XN25) der Hochdruckwelle (91),
- von einem siebenten Sensor (28) des Öffnungsgrads mindestens eines Ventils (14) des Kühlluftkreises (HPTACC) ein Öffnungsgrad (TO14) eines Ventils des Kühlluftkreises (13),

in einer Recheneinheit (30) die Kühlluft-Durchflussrate (W$_{HPTACC}$) in Abhängigkeit von mindestens dem Gebläseeinlass-Gesamtdruck (PT2), dem statischen Auslassdruck (Ps3) des Hochdruckkompressors (6), der Rotationsgeschwindigkeit (XN12) der Niederdruckwelle (101), der Rotationsgeschwindigkeit (XN25) der Hochdruckwelle (91) und dem Ventilöffnungsgrad (TO14) des Kühlluftkreises (13) berechnet wird.

2. Verfahren nach Anspruch 1, **dadurch gekennzeichnet, dass** von einem dritten Temperatursensor (25), der zwischen einem Niederdruckkompressor (4) der Turbomaschine und dem Hochdruckkompressor (6) angeordnet ist, eine Temperatur (T25) zwischen Kompressoren gemessen wird,
in der Recheneinheit (30) die Kühlluft-Durchflussrate (W$_{HPTACC}$) in Abhängigkeit von mindestens dem Gebläseeinlass-Gesamtdruck (PT2), dem statischen Auslassdruck (Ps3) des Hochdruckkompressors (6), der Temperatur (T25) zwischen Kompressoren, der Rotationsgeschwindigkeit (XN12) der Niederdruckwelle (101), der Rotationsgeschwindigkeit (XN25) der Hochdruckwelle (91) und dem Ventilöffnungsgrad (TO14) des Kühlluftkreises (13) berechnet wird.

3. Verfahren nach Anspruch 1 oder 2, **dadurch gekennzeichnet, dass** von einem vierten Temperatursensor (23), der am Auslass (7) des Hochdruckkompressors (6) angeordnet ist, eine Auslasstemperatur (T3) des Hochdruckkompressors (6) gemessen wird,
in der Recheneinheit (30) die Kühlluft-Durchflussrate (W$_{HPTACC}$) in Abhängigkeit von mindestens dem Gebläseeinlass-Gesamtdruck (PT2), dem statischen Auslassdruck (Ps3) des Hochdruckkompressors (6), der Auslasstemperatur (T3) des Hochdruckkompressors (6), der Rotationsgeschwindigkeit (XN12) der Niederdruckwelle (101), der Rotationsgeschwindigkeit (XN25) der Hochdruckwelle (91) und dem Ventilöffnungsgrad (TO14) des Kühlluftkreises (13) berechnet wird.

4. Verfahren nach einem beliebigen der vorangehenden Ansprüche, **dadurch gekennzeichnet, dass** der erste, zweite, dritte, vierte, fünfte und sechste Sensor (22, 21, 25, 23, 24, 26) Motorsteuerungssensoren sind.

5. Verfahren nach einem beliebigen der vorangehenden Ansprüche, **dadurch gekennzeichnet, dass** der erste, zweite, dritte, vierte, fünfte und sechste Sensor (22, 21, 25, 23, 24, 26) außerhalb des Kühlluftkreises (13) des Gehäuses (121) der Hochdruckturbine (9) der Turbomaschine (1) sind.

6. Verfahren nach einem beliebigen der vorangehenden Ansprüche, **dadurch gekennzeichnet, dass** Werte (V1) einer reduzierten Durchflussrate (W$_{red}$) in einer Datenbank (32) in Kombination mit Werten (V2) eines Verhältnisses der Rotationsgeschwindigkeit (XN25) der Hochdruckwelle (91) zur Rotationsgeschwindigkeit (XN12) der Niederdruckwelle (101) und in Kombination mit Werten (V3) des Ventilöffnungsgrads (TO14) des Kühlluftkreises (13) vorregistriert sind,

eine reduzierte Durchflussrate (W$_{red}$) ausgehend von Werten (V1, V2, V3) der Datenbank (32) und in Abhängigkeit vom berechneten Verhältnis (RM) der Rotationsgeschwindigkeit (XN25) der Hochdruckwelle (91), die gemessen wurde, zur Rotationsgeschwindigkeit (XN12) der Niederdruckwelle (101), die gemessen wurde, und in Abhängigkeit vom Ventilöffnungsgrad (TO14) des Kühlluftkreises (13), der gemessen wurde, berechnet wird, wobei die Kühlluft-Durchflussrate (W$_{HPTACC}$) proportional zur reduzierten Durchflussrate (W$_{red}$), die berechnet wurde, berechnet wird.

7. Verfahren nach einem beliebigen der vorangehenden Ansprüche, **dadurch gekennzeichnet, dass**

von einem dritten Temperatursensor (25), der zwischen einem Niederdruckkompressor (4) der Turbomaschine und dem Hochdruckkompressor (6) angeordnet ist, eine Temperatur (T25) zwischen Kompressoren gemessen wird,
von einem vierten Temperatursensor (23), der am Auslass (7) des Hochdruckkompressors (6) angeordnet ist, eine Auslasstemperatur (T3) des Hochdruckkompressors (6) gemessen wird,
die Kühlluft-Durchflussrate (W$_{HPTACC}$) in Abhängigkeit von einer Differenz zwischen der Auslasstemperatur (T3) des Hochdruckkompressors (6) und der Temperatur (T25) zwischen Kompressoren berechnet wird.

8. Verfahren nach Anspruch 7, **dadurch gekennzeichnet, dass** die Kühlluft-Durchflussrate ($W_{HPTACC}$) in Abhängigkeit von einer Quadratwurzel der Differenz zwischen der Auslasstemperatur (T3) des Hochdruckkompressors (6) und der Temperatur (T25) zwischen Kompressoren berechnet wird.

9. Verfahren nach Anspruch 7, **dadurch gekennzeichnet, dass** die Kühlluft-Durchflussrate ($W_{HPTACC}$) proportional umgekehrt zu einer Quadratwurzel der Differenz zwischen der Auslasstemperatur (T3) des Hochdruckkompressors (6) und der Temperatur (T25) zwischen Kompressoren berechnet wird.

10. Verfahren nach einem beliebigen der vorangehenden Ansprüche, **dadurch gekennzeichnet, dass** die Kühlluft-Durchflussrate ($W_{HPTACC}$) proportional zur Differenz zwischen dem statischen Auslassdruck (Ps3) des Hochdruckkompressors (6) und dem Gebläseeinlass-Gesamtdruck (PT2) berechnet wird.

11. Verfahren nach einem beliebigen der vorangehenden Ansprüche, **dadurch gekennzeichnet, dass** die Kühlluft-Durchflussrate ($W_{HPTACC}$) proportional zum Verhältnis des Gebläseeinlass-Gesamtdrucks (PT2) zum statischen Auslassdruck (Ps3) des Hochdruckkompressors (6) berechnet wird.

12. Messvorrichtung, die bestimmt ist, eine Kühlluft-Durchflussrate ($W_{HPTACC}$) in einem Kühlluftkreis (13) eines Gehäuses (121) einer Hochdruckturbine (9) einer Turbomaschine (1) zu messen,
**dadurch gekennzeichnet, dass** sie mindestens aufweist

- einen ersten Drucksensor (22), der bestimmt ist, am Einlass (2) eines Gebläses (3) der Turbomaschine (1) angeordnet zu sein, um einen Gebläseeinlass-Gesamtdruck (PT2) zu messen,
- einen zweiten Drucksensor (21), der bestimmt ist, am Auslass (7) eines Hochdruckkompressors (6) der Turbomaschine angeordnet zu sein, um einen statischen Auslassdruck (Ps3) des Hochdruckkompressors (6) zu messen,
- einen fünften Sensor (24) der Rotationsgeschwindigkeit (XN12) einer Niederdruckwelle (101),
- einen sechsten Sensor (26) der Rotationsgeschwindigkeit (XN25) einer Hochdruckwelle (91),
- einen siebenten Sensor (28) des Öffnungsgrads (TO14) mindestens eines Ventils (14) des Kühlluftkreises (13),
- eine Einheit (30) zur Berechnung der Kühlluft-Durchflussrate ($W_{HPTACC}$) im Kühlluftkreis (13) des Gehäuses (121) der Hochdruckturbine (9) in Abhängigkeit von mindestens dem Gebläseeinlass-Gesamtdruck (PT2), dem statischen Auslassdruck (Ps3) des Hochdruckkompressors (6), der Rotationsgeschwindigkeit (XN12) der Niederdruckwelle (101), der Rotationsgeschwindigkeit (XN25) der Hochdruckwelle (91) und dem Ventilöffnungsgrad (TO14) des Kühlluftkreises (13).

13. Vorrichtung nach Anspruch 12, **dadurch gekennzeichnet, dass** die Vorrichtung einen dritten Temperatursensor (25) aufweist, der bestimmt ist, zwischen einem Niederdruckkompressor (4) der Turbomaschine und dem Hochdruckkompressor (6) angeordnet zu sein, um eine Temperatur (T25) zwischen Kompressoren zu messen,
wobei die Recheneinheit (30) vorgesehen ist, die Kühlluft-Durchflussrate ($W_{HPTACC}$) im Kühlluftkreis (13) des Gehäuses (121) der Hochdruckturbine (9) in Abhängigkeit von mindestens dem Gebläseeinlass-Gesamtdruck (PT2), dem statischen Auslassdruck (Ps3) des Hochdruckkompressors (6), der Temperatur (T25) zwischen Kompressoren, der Rotationsgeschwindigkeit (XN12) der Niederdruckwelle (101), der Rotationsgeschwindigkeit (XN25) der Hochdruckwelle (91) und dem Ventilöffnungsgrad (TO14) des Kühlluftkreises (13) zu berechnen.

14. Vorrichtung nach Anspruch 12 oder 13, **dadurch gekennzeichnet, dass** die Vorrichtung einen vierten Temperatursensor (23) aufweist, der bestimmt ist, am Auslass (7) des Hochdruckkompressors (6) angeordnet zu sein, um eine Auslasstemperatur (T3) des Hochdruckkompressors (6) zu messen,
wobei die Recheneinheit (30) vorgesehen ist, die Kühlluft-Durchflussrate ($W_{HPTACC}$) im Kühlluftkreis (13) des Gehäuses (121) der Hochdruckturbine (9) in Abhängigkeit von mindestens dem Gebläseeinlass-Gesamtdruck (PT2), dem statischen Auslassdruck (Ps3) des Hochdruckkompressors (6), der Auslasstemperatur (T3) des Hochdruckkompressors (6), der Rotationsgeschwindigkeit (XN12) der Niederdruckwelle (101), der Rotationsgeschwindigkeit (XN25) der Hochdruckwelle (91) und dem Ventilöffnungsgrad (TO14) des Kühlluftkreises (13) zu berechnen.

15. Rechnerprogramm, das Codebefehle für die Durchführung des Verfahren zur Messung der Durchflussrate ($W_{HPTACC}$) von Kühlluft in einem Kühlluftkreis (13) eines Gehäuses (121) einer Hochdruckturbine (9) einer Turbomaschine (1) nach einem beliebigen der Ansprüche 1 bis 12 aufweist, wenn es auf einem Rechner ausgeführt wird, der zu einer Recheneinheit (30) der Messvorrichtung nach einem beliebigen der Ansprüche 12 bis 14 gehört.

**Claims**

1. A method for measuring the flow rate ($W_{HPTACC}$) of cooling air in a cooling air circuit (13) of a casing (121) of a high-pressure turbine (9) of a turbomachine (1),
   **characterized in that**

   measurements are made at least

   - by a first sensor (22) of pressure, disposed at a fan inlet (2) of a fan (3) of the turbomachine (1), of a total pressure (PT2) at the fan inlet,
   - by a second sensor (21) of pressure, disposed at an outlet (7) of a high-pressure compressor (6) of the turbomachine, of a static pressure (Ps3) at the outlet of the high-pressure compressor (6),
   - by a fifth sensor (24) of rotational speed of a low-pressure shaft (101), of a rotational speed (XN12) of the low-pressure shaft (101),
   - by a sixth sensor (26) of rotational speed of a high-pressure shaft (91), of a rotational speed (XN25) of the high-pressure shaft (91),
   - by a seventh sensor (28) of the degree of opening of at least one valve (14) of the cooling air circuit (HPTACC), of a degree (T014) of valve opening of the cooling air circuit (13),

   a computing unit (30) computes the flow rate ($W_{HPTACC}$) of cooling air as a function of at least the total pressure (PT2) at the fan inlet, of the static pressure (Ps3) at the outlet of the high-pressure compressor (6), of the rotational speed (XN12) of the low-pressure shaft (101), of the rotational speed (XN25) of the high-pressure shaft (91) and of the degree (T014) of valve opening of the cooling air circuit (13).

2. The method as claimed in claim 1, **characterized in that** a measurement is made by a third sensor (25) of temperature, disposed between a low-pressure compressor (4) of the turbomachine and the high-pressure compressor (6), of a temperature (T25) between compressors,
   a computing unit (30) computes the flow rate ($W_{HPTACC}$) of cooling air as a function of at least the total pressure (PT2) at the fan inlet, of the static pressure (Ps3) at the outlet of the high-pressure compressor (6), of the temperature (T25) between compressors, of the rotational speed (XN12) of the low-pressure shaft (101), of the rotational speed (XN25) of the high-pressure shaft (91) and of the degree (TO14) of valve opening of the cooling air circuit (13).

3. The method as claimed in claim 1 or 2, **characterized in that** a measurement is made by a fourth sensor (23) of temperature, disposed at the outlet (7) of the high-pressure compressor (6), of an outlet temperature (T3) of the high-pressure compressor (6),
   the computing unit (30) computes the flow rate ($W_{HPTACC}$) of cooling air as a function of at least the total pressure (PT2) at the fan inlet, of the static pressure (Ps3) at the outlet of the high-pressure compressor (6), of the outlet temperature (T3) of the high-pressure compressor (6), of the rotational speed (XN12) of the low-pressure shaft (101), of the rotational speed (XN25) of the high-pressure shaft (91) and of the degree (T014) of valve opening of the cooling air circuit (13).

4. The method as claimed in any of the preceding claims, **characterized in that** the first, second, third, fourth, fifth and sixth sensors (22, 21, 25, 23, 24, 26) are engine control sensors.

5. The method as claimed in any of the preceding claims, **characterized in that** the first, second, third, fourth, fifth and sixth sensors (22, 21, 25, 23, 24, 26) are external to the cooling air circuit (13) of the casing (121) of the high-pressure turbine (9) of the turbomachine (1).

6. The method as claimed in any of the preceding claims, **characterized in that** values (V1) of reduced flow rate ($W_{red}$) are previously stored in a database (32) in association with values (V2) of a ratio of the rotational speed (XN25) of the high-pressure shaft (91) to the rotational speed (XN12) of the low-pressure shaft (101) and in association with values (V3) of the degree (T014) of valve opening of the cooling air circuit (13),

   a reduced flow rate ($W_{red}$) is computed, based on values (V1, V2, V3) of the database (32) and as a function of the computed ratio (RM) of the rotational speed (XN25) of the high-pressure shaft (91), which has been measured, to the rotational speed (XN12) of the low-pressure shaft (101), which has been measured, and as a function of the degree (T014) of valve opening of the cooling air circuit (13), which has been measured,
   the flow rate ($W_{HPTACC}$) of cooling air being computed proportionately to the reduced flow rate ($W_{red}$), which has been computed.

7. The method as claimed in any of the preceding claims, **characterized in that**

a measurement is made by a third sensor (25) of temperature, disposed between a low-pressure compressor (4) of the turbomachine and the high-pressure compressor (6), of a temperature (T25) between compressors, a measurement is made by a fourth sensor (23) of temperature, disposed at the outlet (7) of the high-pressure compressor (6), of an outlet temperature (T3) of the high-pressure compressor (6), the flow rate ($W_{HPTACC}$) of cooling air is computed as a function of a difference between the outlet temperature (T3) of the high-pressure compressor (6) and the temperature (T25) between compressors.

8. The method as claimed in claim 7, **characterized in that** the flow rate ($W_{HPTACC}$) of cooling air is computed as a function of a square root of the difference between the outlet temperature (T3) of the high-pressure compressor (6) and the temperature (T25) between compressors.

9. The method as claimed in claim 7, **characterized in that** the flow rate ($W_{HPTACC}$) of cooling air is computed proportionately to the inverse of the square root of the difference between the outlet temperature (T3) of the high-pressure compressor (6) and the temperature (T25) between compressors.

10. The method as claimed in any of the preceding claims, **characterized in that** the flow rate ($W_{HPTACC}$) of cooling air is computed proportionately to the difference between the static pressure (Ps3) at the outlet of the high-pressure compressor (6) and the total pressure (PT2) at the fan inlet.

11. The method as claimed in any of the preceding claims, **characterized in that** the flow rate ($W_{HPTACC}$) of cooling air is computed proportionately to the ratio of the total pressure (PT2) at the fan inlet to the static pressure (Ps3) at the outlet of the high-pressure compressor (6).

12. A measuring device, intended to measure a flow rate ($W_{HPTACC}$) of cooling air in a cooling air circuit (13) of a casing (121) of a high-pressure turbine (9) of a turbomachine (1), **characterized in that** it comprises at least

- a first sensor (22) of pressure, intended to be disposed at a fan inlet (2) of a fan (3) of the turbomachine (1), for measuring a total pressure (PT2) at the fan inlet,
- a second sensor (21) of pressure, intended to be disposed at the outlet (7) of a high-pressure compressor (6) of the turbomachine, for measuring a static pressure (Ps3) at the outlet of the high-pressure compressor (6),
- a fifth sensor (24) of rotational speed (XN12) of a low-pressure shaft (101),
- a sixth sensor (26) of rotational speed (XN25) of a high-pressure shaft (91),
- a seventh sensor (28) of the degree (TO14) of opening of at least one valve (14) of the cooling air circuit (13),
- a unit (30) for computing the flow rate ($W_{HPTACC}$) of cooling air in the cooling air circuit (13) of the casing (121) of the high-pressure turbine (9) as a function of at least the total pressure (PT2) at the fan inlet, of the static pressure (Ps3) at the outlet of the high-pressure compressor (6), of the rotational speed (XN12) of the low-pressure shaft (101), of the rotational speed (XN25) of the high-pressure shaft (91), and of the degree (TO14) of opening of the cooling air circuit (13).

13. The device as claimed in claim 12, **characterized in that** the device comprises a third sensor (25) of temperature, intended to be disposed between a low-pressure compressor (4) of the turbomachine and the high-pressure compressor (6), for measuring a temperature (T25) between compressors, the computing unit (30) being provided for computing the flow rate ($W_{HPTACC}$) of cooling air in the cooling air circuit (13) of the casing (121) of the high-pressure turbine (9) as a function of at least the total pressure (PT2) at the fan inlet, of the static pressure (Ps3) at the outlet of the high-pressure compressor (6), of the temperature (T25) between compressors, of the rotational speed (XN12) of the low-pressure shaft (101), of the rotational speed (XN25) of the high-pressure shaft (91) and of the degree (TO14) of opening of the cooling air circuit (13).

14. The device as claimed in claim 12 or 13, **characterized in that** the device comprises a fourth sensor (23) of temperature, intended to be disposed at the outlet (7) of the high-pressure compressor (6), for measuring an outlet temperature (T3) of the high-pressure compressor (6), the computing unit (30) being provided for computing the flow rate ($W_{HPTACC}$) of cooling air in the cooling air circuit (13) of the casing (121) of the high-pressure turbine (9) as a function of at least the total pressure (PT2) at the fan inlet, of the static pressure (Ps3) at the outlet of the high-pressure compressor (6), of the outlet temperature (T3) of the high-pressure compressor (6), of the rotational speed (XN12) of the low-pressure shaft (101), of the rotational speed (XN25) of the high-pressure shaft (91) and of the degree (T014) of opening of the cooling air circuit (13).

15. A computer program, comprising code instructions for implementing the method for measuring the flow rate ($W_{HPTACC}$) of cooling air in a cooling air circuit (13) of a casing (121) of a high-pressure turbine (9) of a turbomachine (1) as claimed in any of claims 1 to 12, when it is executed on a calculator (30) belonging to the computing unit (30) of the measuring device as claimed in any of claims 12 to 14.

**FIG. 1**

EP 3 717 750 B1

# FIG. 2

**RÉFÉRENCES CITÉES DANS LA DESCRIPTION**

**Documents brevets cités dans la description**

- FR 2999226 A